# EUROPEAN PATENT SPECIFICATION

(11) **EP 4 284 109 B1**
(45) Date of publication and mention of the grant of the patent: **30.09.2026**
(21) Application number: 21921870.8
(22) Date of filing: 29.01.2021
(51) Int. Cl.: H04W 4/80, H04W 4/38, H04W 76/11, G06K 7/10

(54) **COMMUNICATION METHOD AND COMMUNICATION APPARATUS**
KOMMUNIKATIONSVERFAHREN UND KOMMUNIKATIONSVORRICHTUNG
PROCÉDÉ DE COMMUNICATION ET APPAREIL DE COMMUNICATION

(43) Date of publication of application: 29.11.2023
(73) Proprietor: Huawei Technologies Co., Ltd., Shenzhen, Guangdong 518129 (CN)
(72) Inventor: LI, Chenwan, Shenzhen, Guangdong 518129 (CN); WU, Yiling, Shenzhen, Guangdong 518129 (CN); FENG, Xibao, Shenzhen, Guangdong 518129 (CN)
(74) Representative: Goddar, Heinz J.
(86) International application number: PCT/CN2021/074451
(87) International publication number: WO 2022/160265

(56) References cited:
- WO-A1-2020/140729
- CN-A- 101 567 054
- CN-A- 106 911 997
- JP-A- 2020 068 460
- US-A1- 2012 313 447
- US-A1- 2018 108 024
- US-A1- 2020 213 823

## Description

### TECHNICAL FIELD

This application relates to the communication field, and more specifically, to a communication method and a communication apparatus.

### BACKGROUND

A passive radio frequency identification (radio frequency identification, RFID) technology is a non-contact automatic identification technology. In the passive radio frequency identification technology, by using a radio frequency signal, a target object is automatically identified and related data is obtained; and identification work can be implemented in various harsh environments without manual intervention. A working principle of the passive radio frequency identification technology is as follows: After entering a magnetic field of a reader/writer, a passive RFID tag may receive a radio frequency signal sent by the reader/writer, and send, based on energy obtained from an induced current, product information stored in the RFID tag. The reader/writer reads and decodes the information, and then sends decoded information to a central information system for related data processing.

Currently, in a process of inventory of the reader/writer, tag access is triggered by the reader/writer, and only a tag that meets a requirement of the reader/writer or a tag server can access. In this case, low system efficiency and a high missed reading rate may exist.
US 2012/313447 A1 describes a method and apparatus for performing bidirectional communication between a transmitter and a receiver in a wireless power transmission system. The method includes detecting the receiver; transmitting, when the receiver is detected, a predetermined level of power to the receiver through a transmission (Tx) resonator; receiving a request for transmitting wireless power from the receiver through a wireless communication module; allocating a Short ID (SID) and a time slot corresponding to the receiver; transmitting the SID and the time slot to the receiver through the wireless communication module; receiving a request for required power from the receiver through the wireless communication module; determining whether the required power is greater than a residual power of the transmitter; and when the required power is greater than the residual power, informing the receiver through the wireless communication module that the required power cannot be transmitted.
US 2020/213823 A1 describes a system and method for sensor-based monitoring that includes a computer system, smart nodes, and an RFID reader device. The system collects data to measure health condition of a plurality of people at an event. The computer system determines candidate cluster heads with above average battery level. The smart nodes determine a subset of the candidate cluster heads that are within communication range, retrieve battery level of the determined subset of cluster heads, and select a cluster head having the highest battery level. The selected cluster head announces selection as the selected cluster head, receives requests to join a cluster, reads sensor data of the body sensor in each joined smart sensor as collective sensor data for the cluster, and sends the collective sensor data to the computer system via the RFID reader.
US 2018/0108024 A1 describes a proof of proximity method, wherein a circuit of an identity tag wirelessly broadcasts a unique identifier stored on the tag. An application discovers the tag and the unique identifier of the tag. The application accesses an open registry and uses the unique identifier to retrieve an associated network accessible location stored on the registry. The application requests access to the network accessible location and/or the services provided at the location. The network accessible location generates and transmits a proximity challenge message to the application. The application forwards the proximity challenge message to the circuit of the tag, which digitally signs the challenge message using a private key stored on the tag. The circuit transmits the signed proximity challenge to the device, which then forwards it to the network accessible location. The network accessible location determines if the signed proximity challenge message is valid using a public key. If the digital signature is validated, the proof of proximity succeeds such that the location provides the device/application access to the services provided by the location.

### SUMMARY

This application provides a communication method and a communication apparatus, to improve system efficiency and reduce a missed reading rate. The invention is defined by the independent claims. Advantageous embodiments of the invention are given by the dependent claims.

### BRIEF DESCRIPTION OF DRAWINGS

FIG. 1 shows an example of an architecture of a system 100 to which an embodiment of this application is applicable;
FIG. 2 is a schematic flowchart of a tag access method according to this application;
FIG. 3 is a schematic flowchart of another tag access method according to this application;
FIG. 4 is a schematic flowchart of still another tag access method according to this application;
FIG. 5 is a schematic block diagram of a communication apparatus 500 according to this application;
FIG. 6 is a schematic block diagram of a communication apparatus 600 according to this application;
FIG. 7 is a schematic diagram of a structure of a communication apparatus 700 according to this application; and
FIG. 8 is a schematic diagram of a structure of a communication apparatus 800 according to this application.

### DESCRIPTION OF EMBODIMENTS

The following describes technical solutions of this application with reference to accompanying drawings.

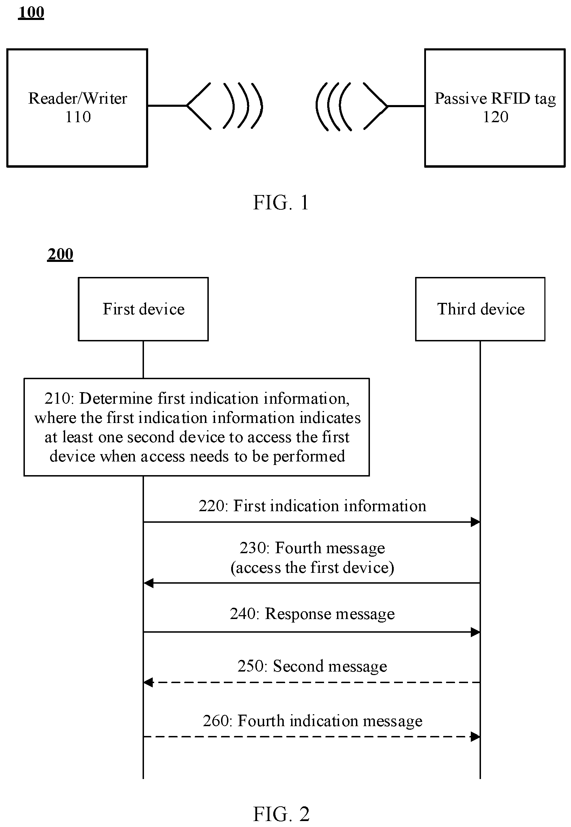

FIG. 1 shows an example of an architecture of a system 100 to which an embodiment of this application is applied. The system 100 includes a reader/writer 110 and a passive RFID tag 120, where the reader/writer 110 and the passive RFID tag 120 may communicate with each other by using a radio frequency (Radio Frequency, RF) signal. The reader/writer 110 may transmit a query RF signal, the passive RFID tag 120 located near the reader/writer 110 may detect the query RF signal sent by the reader/writer 110, and return a reply RF signal to the reader/writer 110, and the reply RF signal may carry related information of the passive RFID tag 120. The reader/writer 110 may detect and parse the reply RF signal.

It should be understood that one reader/writer 110 and one passive RFID tag 120 are shown as an example in FIG. 1. In the system 100, one reader/writer 110 may communicate with a plurality of RFID tags 120, and the system 100 may include a plurality of reader/writers 110. This is not limited in this embodiment of this application.

The system 100 shown in FIG. 1 may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th Generation, 5G) mobile communication system, or a new radio access technology (new radio access Technology, NR). The 5G mobile communication system may include a non-standalone (non-standalone, NSA) communication system and/or a standalone (standalone, SA) communication system.

The technical solutions provided in this application may be further applied to a future communication system, for example, a 6th generation mobile communication system. This is not limited in this application.

It should be understood that the reader/writer 110 in FIG. 1 is a handheld or fixed device that reads (sometimes may also write) tag information, and may alternatively be understood as a device that communicates with a tag. The reader/writer 110 may be a terminal device, a network device, or a device with a read/write function.

It should be understood that the passive RFID tag 120 in FIG. 1 may alternatively be a passive Internet of things device, and therefore, the passive RFID tag 120 may alternatively be a terminal device.

The terminal device may be user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides voice/data connectivity for a user, for example, a handheld device having a wireless connection function or a vehicle-mounted device. Currently, some examples of the terminal may be: a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device connected to a wireless modem, a vehicle-mounted device, a wearable device, a terminal device in a 5G network, and a terminal device in a future evolved public land mobile network (public land mobile network, PLMN).

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on a body or integrated into clothes or an accessory of the user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands, or smart jewelry for monitoring physical signs.

In addition, the terminal device may alternatively be a terminal device in an Internet of things (internet of things, IoT) system. The IoT is an important part in future development of information technologies. A main technical feature of the IoT is to connect things to a network by using a communication technology, to implement an intelligent network for human-machine interconnection and thing-thing interconnection. IoT technologies can achieve massive connections, deep coverage, and terminal power saving by using, for example, a narrow band (narrow band, NB) technology.

In addition, the terminal device may alternatively include sensors such as an intelligent printer, a train detector, and a gas station, and main functions include: collecting data (which is a function of some terminal devices), receiving control information and downlink data of a network device, sending an electromagnetic wave, and transmitting uplink data to the network device.

In embodiments of this application, a network device may be any device having the wireless transceiver function. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like. Alternatively, the network device may be a gNB or a transmission point (TRP or TP) in a 5G system such as an NR system, may be one antenna panel or a group (including a plurality of antenna panels) of antenna panels of a base station in the 5G system, or may be a network node, such as a baseband unit (BBU) or a distributed unit (distributed unit, DU), that constitutes a gNB or a transmission point.

In some deployments, the gNB may include a central unit (centralized unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implementing functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

The network device serves a cell, and a terminal device communicates with the cell by using a transmission resource (for example, a frequency domain resource or a spectrum resource) allocated by the network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), and the like. These small cells have characteristics of small coverage and low transmit power, and are applicable to providing a high-rate data transmission service.

Currently, a process of obtaining information of a tag by the reader/writer is generally as follows: First, the reader/writer sends select (select) signaling to the tag, and selects a group of tags by selecting a selected (selected, SL) tag flag bit or an inventoried (inventoried) tag bit and a mask. A specific representation manner may be indicating a storage interval of the tag, a start location of the tag, and a length of a character string. Then, the reader/writer sends a Query (Query) command, that is, sends the Query command, to initiate an inventory. This command includes a parameter Q of a set slot counter (slot counter). The selected tag randomly selects a number k from (0, 2^{Q} - 1). Then, the reader/writer sends a QueryRep (QueryRep) command, and the tag performs k = k - 1. However, when a collision occurs or the tag does not receive a response message, the reader/writer may adjust a value of Q, and send a QueryAdjust (QueryAdjust) command, that is, the parameter Q may change to Q = Q + 1 or Q = Q - 1 or remain unchanged. Similarly, the tag randomly selects a number m from (0, 2Q - 1). The reader/writer sends a QueryRep command, and the tag performs m = m - 1. When m = 0, the tag sends an RN 16 to the reader/writer. If the tag receives a valid acknowledgment (acknowledge, ACK) message from the reader/writer, the tag enters a reply (reply) state. If the tag does not receive a valid ACK message or receives an ACK message with an incorrect RN 16, the tag enters an arbitration (arbitrate) state and the counter is decreased to 0000 h. After that, the counter is turned over, to start counting from 7FFF h.

In the foregoing process of inventory of the reader/writer, tag access is triggered by the reader/writer, and only a tag that meets a requirement of the reader/writer or a tag server can access, that is, the tag cannot actively trigger access, and a command cannot be directly sent to the reader/writer. In this case, low system efficiency and a high missed reading rate may exist. Embodiments of this application provide a tag access method, which not only implements active access of a tag, but also implements high system efficiency and a low missed reading rate.

For ease of understanding of embodiments of this application, the following descriptions are first provided before embodiments of this application are described.

First, in embodiments of this application, "indicate" may include used for direct indication and used for indirect indication. For example, when a piece of indication information is described, to indicate information I, the indication information may directly indicate I or indirectly indicate I, but it does not necessarily indicate that the indication information carries I.

Information indicated by indication information is referred to as to-be-indicated information. In a specific implementation process, there are a plurality of manners of indicating the to-be-indicated information, for example, but not limited to, the following manners: The to-be-indicated information is directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, a common part of all pieces of information may further be identified and indicated in a unified manner, to reduce indication overheads caused by separately indicating same information.

Furthermore, specific indication manners may alternatively be various existing indication manners, for example, but not limited to, the foregoing indication manners and various combinations thereof. For details of the various indication manners, refer to the conventional technology. The details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manners in embodiments of this application should be understood as covering various methods that enable a to-be-indicated party to learn of the to-be-indicated information.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit end device by sending configuration information to a receive end device.

Second, the terms "first", "second", and various numbers in the following embodiments are merely used for differentiation for ease of description, and are not intended to limit the scope of embodiments of this application. For example, the terms are used to differentiate between different indication information.

Third, in embodiments described below, "predefinition" may be implemented by prestoring corresponding code or a corresponding table in a device (for example, including a terminal device and a network device), or may be implemented in another manner that may be used to indicate related information. A specific implementation thereof is not limited in this application.

Fourth, a "protocol" in embodiments of this application may be a standard protocol in the communication field, for example, may include an LTE protocol, an NR protocol, and a related protocol applied to a future communication system. This is not limited in this application.

Fifth, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof refers to any combination of these items, including any combination of singular items (pieces) or plural items (pieces). For example, at least one of a, b, and c may represent: a, b, or c, a and b, a and c, b and c, or a, b, and c, where a, b, and c each may be singular or plural.

The following describes in detail a method provided in embodiments of this application with reference to the accompanying drawings.

FIG. 2 is a schematic flowchart of a tag access method 200 according to an embodiment of this application. As shown in FIG. 2, the method 200 may include step 210 to step 260. The following describes steps in the method 200 in detail with reference to the accompanying drawings.

S210: A first device determines first indication information, where the first indication information indicates at least one second device to access the first device when access needs to be performed.

S220: The first device sends the first indication information.

It should be understood that the following uses an example in which the first device is a reader/writer, the at least one second device is at least one tag device, and a third device is a first tag device for description.

For example, the reader/writer determines the first indication information, and the first indication information may be obtained from another network device, for example, obtained from a server or a core network. The first indication information indicates the at least one tag device to access the reader/writer when access needs to be performed, and then, the reader/writer sends the first indication information. In other words, the reader/writer needs to determine and query whether a tag device around the reader/writer needs to perform access. It should be understood that, that the tag needs to perform access in this embodiment of this application may also be understood as that a tag device has a reporting requirement. That is, in this embodiment of this application, the tag device that needs to access the reader/writer is a tag device that has the reporting requirement and meets a trigger requirement of the reader/writer.

It should be understood that the reporting requirement may be that the tag device needs to report a message like an exception message, an error message, or a notification message to the reader/writer. This is not excessively limited in this embodiment of this application.

It should be understood that the reader/writer sends the first indication information to all tag devices located in a magnetic field range of the reader/writer, and more specifically, the reader/writer may send the first indication information to all the tag devices in a broadcast manner.

Optionally, the first indication information may be indicated by one bit, or may be indicated by a plurality of bits, for example, may be indicated by using a mask. This is not excessively limited in this embodiment of this application.

Optionally, the first indication information may include a first access cause, a first feature, a first access category, or the like, and separately indicates a tag having the first access cause, the first feature, or the first access category to perform access, that is, indicates tags that meet these conditions to perform access. This is not excessively limited in this embodiment of this application.

Optionally, the first indication information may be carried in select signaling, or may be carried in Query signaling, or may be carried in other signaling. However, this is not limited in this embodiment of this application.

In an optional embodiment, if the first indication information is carried in the Query signaling, in this embodiment of this application, it may be understood that the reader/writer sends the Query signaling carrying the indication information after sending a select command to select a group of tag devices. In this case, the first indication information indicates that in the group of tag devices, a tag device that needs to perform access may first access the reader/writer.

In another optional embodiment, if the first indication information is carried in another command, a possible situation is that the reader/writer does not need to send the select signaling and the Query signaling, that is, after the tag device that needs to perform access receives, from the reader/writer, other signaling that carries the first indication information, the tag device that needs to perform access directly enters step S230.

In step S230, the third device sends a fourth message to the first device, where the fourth message is used by the first tag device to access the reader/writer.

For example, after receiving the first indication information from the reader/writer (the first device), the first tag device (the third device) that needs to perform access may send the fourth message to the reader/writer, and the fourth message may be used by the first tag device to access the reader/writer. It may also be understood that, when the first tag device needs to perform access, after receiving, from the reader/writer, the first indication information used for query, the first tag device sends the fourth message to the reader/writer, and the fourth message notifies the reader/writer that the first tag device needs to perform access. In this case, information in the fourth message aims to notify the reader/writer that the first tag device needs to perform access. A cause why the first tag device needs to perform access may be event-triggered reporting, for example, excessively high temperature or excessively low humidity, or may be at least one of alarming, exception reporting, sensor data reporting, or information updating. A specific cause why the first tag device needs to perform access is not limited herein.

Optionally, the fourth message may include a tag identifier and data to be transmitted by the tag, for example, sensor data.

Optionally, the fourth message may include tag identifier information and an access cause.

It should be understood that the information in the fourth message may be a random number, for example, an RN 16 or an RN 5, may be identifier information of the tag device, for example, electronic product code (electronic product code, EPC), a tag identifier (tag identifier, TID), or other identifier information, may be a cause value, or may be a combination of any two or more of the random number, the identifier information of the tag device, the cause value, a sign-in code, and an access sequence. This is not limited in this embodiment of this application.

There are many manners for the first tag device to access the reader/writer. For example, the manners include but are not limited to the manner based on a Q value, or a manner that the reader/writer sends a message carrying a default bound Q value to the tag device, or a manner that the first tag device accesses the reader/writer immediately after receiving the first indication information sent by the reader/writer. A specific access manner is not limited in this embodiment of this application.

That the manner based on the Q value is still used may be as follows: The first tag device generates a random number k, where 0 < k < 2^{Q} - 1, an information indication used to decrease a counter is received, the counter starts to perform k = k - 1, and the first tag device initiates access when the counter decreases to 0.

When the reader/writer sends the message carrying the default bound Q value to the tag device, an implementation may be as follows: For example, if the bound Q value is 2, there are four slots available for the first tag device to select one of the slots, to access the reader/writer.

S240: The first device sends a response message.

For example, after receiving the fourth message from the first tag device, the reader/writer sends the response message, to respond to access of the first tag device. It should be understood that, in this case, the reader/writer also sends the response information to all the tag devices around the reader/writer, but the response information carries a message sent by the first tag device to the reader/writer. For example, the first tag device selects a 16-bit random number as a temporary identity document (identity document, ID), the fourth message sent to the reader/writer carries the 16-bit random number, and the response message sent by the reader/writer also carries the random number. This is used as an acknowledgment fed back to the first tag device. It should be noted that the response message is also sent to all surrounding tag devices, and after receiving the response message, a surrounding tag device confirms whether the random number is a temporary ID of the surrounding tag device.

Optionally, the response message may be an ACK message.

S250: The third device sends a second message to the first device.

As an optional embodiment, the first tag device may further send the second message to the reader/writer, and the second message indicates the cause why the first tag device needs to perform access.

Specifically, when the first tag device needs to perform access, the cause why the first tag device needs to perform access may also be reported to the reader/writer, so that an application layer can take a corresponding measure for the cause. The cause why access needs to be performed may be exception reporting, event-triggered reporting, periodic reporting, or the like, for example, the first tag device may perform reporting due to causes such as temperature, humidity, and pressure, or may be alarming, sensor data reporting, information updating, or the like. In this embodiment of this application, the cause why access or reporting needs to be performed may be one or more of the foregoing causes. For ease of understanding, the cause is referred to as the cause value (cause). However, this is not excessively limited in this embodiment of this application.

It should be noted that the second message and the fourth message may be a same message, that is, content of the second message is the same as content of the fourth message. In this case, the fourth message may be sent to the reader/writer before the second message. Alternatively, the first tag device may send the message after receiving the response information. However, if the first tag device sends the message after receiving the response message, the fourth message does not carry the cause value, that is, when the fourth message does not carry the cause value, the first tag device needs to send another message carrying the cause value to the reader/writer.

It should also be noted that the fourth message carries the identifier information, and the identifier information may be a temporary identifier, or may be a real identifier of the tag device, or may be another identifier that may indicate the tag device. This is not excessively limited in this application. However, when the fourth message does not carry the real ID of the tag, for example, when the fourth message does not carry the EPC ID, after the first tag device receives the response information, the first tag device may send the EPC ID or other identifier information of the first tag device, such as a subscription permanent identifier (subscription permanent identifier, SUPI) or a subscription concealed identifier (Subscription Concealed Identifier, SUCI), to the reader/writer. It should be noted herein that, when the fourth message carries only the temporary ID and does not carry the real ID or the cause value, the real ID and the cause value may be sent to the reader/writer simultaneously, that is, the second message may carry the cause value and the real ID. Certainly, the real ID and the cause value may not be simultaneously sent to the reader/writer. This is not excessively limited in this embodiment of this application. Herein, this is applicable to a manner based on dynamic slotted ALOHA.

Optionally, the fourth message may alternatively include a part of a tag or all identifier, and is used to use a binary search tree access solution.

**In** an optional embodiment, the reader/writer further sends second indication information to the tag device, and the second indication information indicates to report the cause why access needs to be performed.

In an optional embodiment, the reader/writer further sends third indication information to the tag device, and the third indication information indicates an occasion on which the cause why access needs to be performed is reported.

Specifically, when the reader/writer sends the first indication information to the tag device, that is, when the reader/writer queries whether the surrounding tag device needs to actively report or needs to perform access, the reader/writer may send the second indication information simultaneously, or may send the third indication information simultaneously, or may send the second indication information and the third indication information simultaneously. The reader/writer may further carry the second indication information, or carry the third indication information, or carry both the second indication information and the third indication information in the response message when sending the response message, or the second indication message and the third indication message may be a same indication message. This is not excessively limited in this embodiment of this application.

More specifically, the reader/writer may indicate the first tag device to report the cause why the first tag device needs to perform access, or indicate time at which the first tag device reports the cause value. In other words, the first tag device may actively feed back the cause why the first tag device needs to perform access to the reader/writer, or may feed back the cause why the first tag device needs to perform access to the reader/writer after receiving the second indication information and/or the third indication information sent by the reader/writer.

S260: The first device sends fourth indication information.

In an optional embodiment, after the reader/writer sends the first indication information to the surrounding tag devices, a plurality of tag devices that need to perform access may send the fourth message to the reader/writer simultaneously. In this case, a collision may occur. In this case, the reader/writer sends the fourth indication information, and the fourth indication information indicates the tag device that needs to perform access to re-access the reader/writer after the access fails. In other words, when the collision occurs, the reader/writer sends the fourth indication information, to indicate the tag device on which the collision occurs to re-access the reader/writer.

Optionally, the fourth indication information may be carried in signaling, for example, the select signaling, the Query signaling, Query Adjust signaling, or other signaling. However, this is not limited in this embodiment of this application.

Optionally, the signaling may include the Q value, or may not include the Q value. However, when the signaling does not include the Q value, the signaling corresponds to the fixed Q value. This is not excessively limited in this embodiment of this application.

After the tag device on which the collision occurs receives the fourth indication information, for a subsequent procedure, refer to step S230 and step S240. Details are not described again in this application.

In this embodiment of this application, the reader/writer sends the first indication information to the surrounding tag device, to query whether the surrounding tag device needs to perform access, so that an access opportunity can be provided for the tag device that needs to perform access, to improve system efficiency and reduce a missed reading rate.

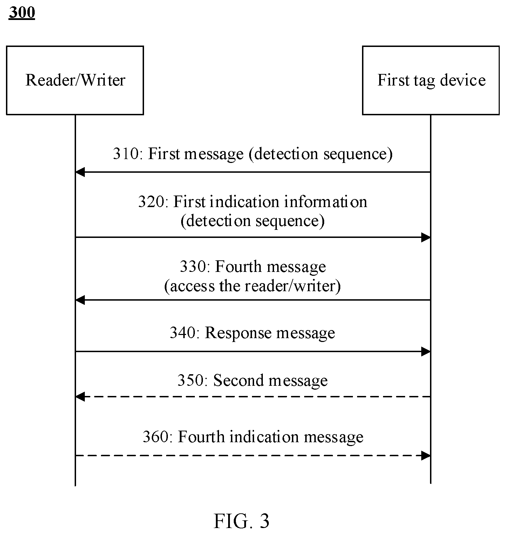

FIG. 3 is a schematic flowchart of a tag access method 300 according to an embodiment of this application. As shown in FIG. 3, the method 300 may include step 310 to step 360. The following describes steps in the method 300 in detail with reference to the accompanying drawings.

S310: A first tag device sends a first message to a reader/writer, where the first message indicates that the first tag device needs to perform access.

Specifically, when the first tag device needs to perform access or has an active reporting requirement or capability, the first tag device needs to send the first message to the reader/writer, to report to the reader/writer that the first tag device needs to perform access. In this embodiment of this application, the first message carries a detection sequence or the first message may be detection signaling. It should be understood that, that the tag in this embodiment of this application needs to perform access may be that a tag device has a reporting requirement.

Optionally, the detection sequence may alternatively be identifier information of the tag.

It should be understood that the reporting requirement may be that the tag device needs to report a message such as an exception message, an error message, or a notification message to the reader/writer. This is not excessively limited in this embodiment of this application.

S320: The reader/writer sends first indication information.

Specifically, after receiving the first message from the tag device that needs to perform access, the reader/writer forwards the first message to another network device, for example, a core network or a server, and then obtains the first indication information from the another network device. In other words, the first message sent by the first tag device is first sent to the another network device through the reader/writer, and after receiving the first message, the another network device generates the first indication information based on the first message, and sends the first indication information to the reader/writer.

Optionally, the first indication information carries the detection sequence. The first indication information includes all sequence of the detection sequence, or includes a part of the sequence of the detection sequence, or a processed detection sequence, or the detection sequence may be used as a mask. This is not limited in this application.

Optionally, the first indication information indicates a tag having an access requirement to perform access. For a specific access manner thereof, refer to S220. For brevity, details are not described again in this embodiment of this application.

It should be understood that, that the reader/writer sends the first indication information is to send to all tag devices located in a magnetic field range of the reader/writer, and more specifically, may send the first indication information to all the tag devices in a broadcast manner.

Optionally, the first indication information may be carried in select signaling, or may be carried in Query signaling, or may be carried in other signaling. However, this is not limited in this embodiment of this application.

S330: The first tag device sends a fourth message to the reader/writer, where the fourth message is used by the first tag device to access the reader/writer.

Specifically, the reader/writer sends the first indication information to all tag devices around the reader/writer, the first indication information may carry the detection sequence, and after receiving the first indication information, the tag device further determines whether the detection sequence in the first indication information is sent by the tag device. Alternatively, after receiving the first indication information, the first tag device may know that the detection sequence in the first indication information is the sequence sent by the first tag device, and the first tag device sends the fourth message to the reader/writer, to be used by the first tag device to access the reader/writer.

Optionally, the fourth message may include a tag identifier and data to be transmitted by the tag, for example, sensor data.

Optionally, the fourth message may include tag identifier information and an access cause.

It should be understood that the fourth message may be a random number, for example, an RN 16 or an RN 5, may be identifier information of the tag device, for example, an electronic product code (electronic product code, EPC), a tag identifier (TID), or other identifier information, may be a cause value, or may be a combination of any two or more of the random number, the identifier information of the tag device, the cause value, a sign-in code, and an access sequence. This is not limited in this embodiment of this application.

There are many manners for the first tag device to access the reader/writer. For example, the manners include but are not limited to the manner based on a Q value, or a manner that the reader/writer sends a message carrying a default bound Q value to the tag device, or a manner that the first tag device accesses the reader/writer immediately after receiving the first indication information sent by the reader/writer. A specific access manner is not limited in this embodiment of this application.

The manner based on the Q value may be as follows: The first tag device generates a random number k, where 0 < k < 2^{Q} - 1, an information indication used to decrease a counter is received, the counter starts to perform k = k - 1, and the first tag device initiates access when the counter decreases to 0.

When the reader/writer sends the message carrying the default bound Q value to the tag device, an implementation may be as follows: For example, if the bound Q value is 2, there are four slots available for the first tag device to select one of the slots, to access the reader/writer.

Optionally, when the tag uses an access method based on a binary search tree, the fourth message may include a part or all of the identifier information or mask information according to a specifically used method.

S340: The reader/writer sends a response message.

S350: The first tag device sends a second message to the reader/writer.

S360: The reader/writer sends fourth indication information.

For the specific step S340 to the specific step S360, refer to step S240 to step S260, and details are not described herein again.

It should be noted that, before the tag device sends the first message to the reader/writer, for a tag having the active reporting capability, the reader/writer may configure a reporting periodicity and a maximum quantity of reporting times for the tag, and the reader/writer may also configure a function of enabling or disabling a reporting process. This is not excessively limited in this embodiment of this application.

In this embodiment of this application, when the first tag device needs to perform access or has the reporting requirement, the first tag device may actively trigger, to implement access, so that an access opportunity can be provided for the tag having the access requirement, to improve system efficiency and reduce a missed reading rate.

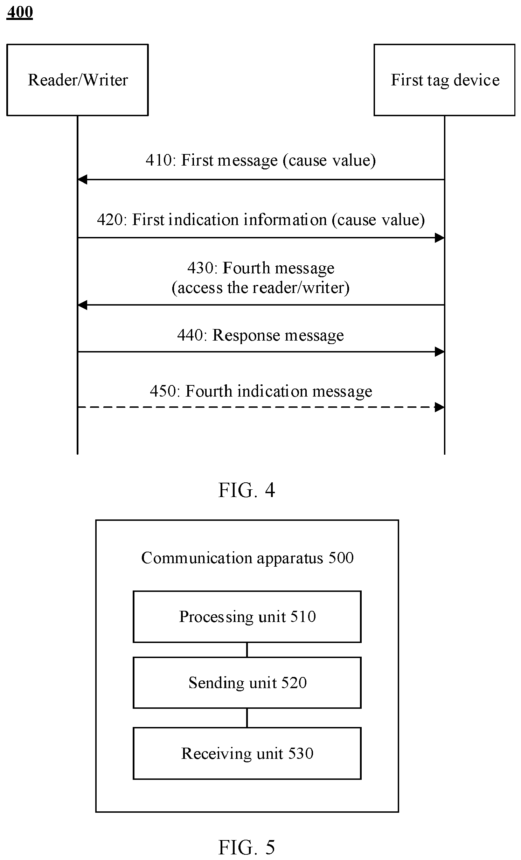

FIG. 4 is a schematic flowchart of a tag access method 400 according to an embodiment of this application. As shown in FIG. 4, the method 400 may include step 410 to step 450. The following describes steps in the method 400 in detail with reference to the accompanying drawings.

S410: A first tag device sends a first message to a reader/writer, where the first message indicates that the first tag device needs to perform access.

Specifically, when the first tag device needs to perform access or has an active reporting requirement or capability, the first tag device needs to send the first message to the reader/writer, to report to the reader/writer that the first tag device needs to perform access, or to request to access the reader/writer. In this embodiment of this application, the first message carries a cause why access needs to be performed. The cause why access needs to be performed may be exception reporting, event-triggered reporting, periodic reporting, or the like, for example, the first tag device may report due to causes such as temperature, humidity, and pressure. In this embodiment of this application, for ease of understanding, the cause is referred to as a cause value (cause).

It should be understood that, that the tag device in this embodiment of this application needs to perform access may alternatively be understood as that the tag device has a reporting requirement. The reporting requirement may be that the tag device needs to report a message such as an exception message, an error message, or a notification message to the reader/writer. This is not excessively limited in this embodiment of this application.

S420: The reader/writer sends first indication information, where the first indication information carries the cause value.

Specifically, after receiving the first message, the reader/writer generates the first indication information based on the first message, and sends the first indication information. The first indication information includes the cause value.

It should be understood that the first indication information may directly include the cause value, or may be that a function of the first indication information or information carried in the first indication information may directly or indirectly indicate/identify that access needs to be performed. The first indication information indicates that the first tag device needs to perform access.

It should be understood that, that the reader/writer sends the first indication information is to send to all tag devices located in a magnetic field range of the reader/writer, and more specifically, may send the first indication information to all the tag devices in a broadcast manner.

Optionally, the first indication information may be carried in select signaling, or may be carried in Query signaling, or may be carried in other signaling. However, this is not limited in this embodiment of this application.

S430: The first tag device sends a fourth message to the reader/writer, where the fourth message is used by the first tag device to access the reader/writer.

Specifically, the reader/writer sends the first indication information to all tag devices around the reader/writer, the first indication information may carry the cause value, and after receiving the first indication information, the tag device further determines whether the cause value in the first indication information is sent by the tag device. Alternatively, after receiving the first indication information, the first tag device may know that the cause value in the first indication information is sent by the first tag device, and the first tag device sends the fourth message to the reader/writer, to indicate that the first tag device has accessed the reader/writer.

Optionally, the fourth message may include a tag identifier and data to be transmitted by the tag, for example, sensor data.

Optionally, the fourth message may include tag identifier information and an access cause.

It should be understood that the fourth message may be a random number, for example, an RN 16 or an RN 5, may be identifier information of the tag device, for example, an electronic product code (electronic product code, EPC), a tag identifier (TID), or other identifier information, or may be a combination of the random number, and the identifier information of the tag. This is not limited in this embodiment of this application.

There are many manners for the first tag device to access the reader/writer. For example, the manners include but are not limited to the manner based on a Q value, or a manner that the reader/writer sends a message carrying a default bound Q value to the tag device, or a manner that the first tag device accesses the reader/writer immediately after receiving the first indication information sent by the reader/writer. A specific access manner is not limited in this embodiment of this application.

The manner based on the Q value may be as follows: The first tag device generates a random number k, where 0 < k < 2^{Q} - 1, an information indication used to decrease a counter is received, the counter starts to perform k = k - 1, and the first tag device initiates access when the counter decreases to 0.

When the reader/writer sends the message carrying the default bound Q value to the tag device, an implementation may be as follows: For example, if the bound Q value is 2, there are four slots available for the first tag device to select one of the slots, to access the reader/writer.

Optionally, when the tag uses an access method based on a binary search tree, the fourth message may include a part or all of the identifier information or mask information according to a specifically used method.

S440: The reader/writer sends a response message. For a specific implementation thereof, refer to the step 240, and details are not described herein again.

It should be noted that, in this embodiment of this application, if the fourth message in the step 430 carries the random number or a temporary ID, after the reader/writer sends the response message, the first tag device needs to send a real ID of the first tag device to the reader/writer, for example, an EPC ID.

It should also be noted that the first message in the step 410 indicates the cause why the first tag device needs to perform access. Therefore, in this embodiment of this application, second indication information and third indication information are not sent again.

S450: The reader/writer sends fourth indication information. For a specific implementation thereof, refer to the step 260, and details are not described herein again.

It should be noted that, before the tag device sends the first message to the reader/writer, for a tag having the active reporting capability, the reader/writer may configure a reporting periodicity and a maximum quantity of reporting times for the tag, and the reader/writer may also configure a function of enabling or disabling a reporting process. This is not excessively limited in this embodiment of this application.

In this embodiment of this application, when the first tag device needs to perform access or has the reporting requirement, the first tag device may actively trigger, to implement access, so that an access opportunity can be provided for the tag having the reporting requirement, to improve system efficiency and reduce a missed reading rate.

In the method 300 and the method 400, to avoid collision between tag devices, a preconfigured resource may exist in the reader/writer, so that the tag device having the access requirement may send the first message to this reserved resource.

Optionally, the preconfigured resource may be a time domain resource, a frequency domain resource, a code domain resource, or the like. For example, the reader/writer may periodically reserve one or more slots, or for the frequency domain resource, the reader/writer may reserve a frequency band for access of the tag device. Specifically, the reader/writer may send a reserved resource configuration to the tag, and after receiving the tag, the tag performs reporting when the active reporting requirement exists. This is not excessively limited in this embodiment of this application.

It should be understood that the preconfigured resource in the reader/writer may be default, or may be configured by the reader/writer, or may be obtained by the reader/writer from a tag server or the core network. This is not limited in this embodiment of this application.

In this embodiment of this application, the tag device sends the first message to the preconfigured resource of the reader/writer, so that active reporting of the tag device is implemented, and interference or collision is reduced for another tag device that does not actively report.

In an optional embodiment, in the method 300 and the method 400, there may be a tag device that needs to perform access sends fifth indication information to a second tag device, and the fifth indication information indicates an occasion on which the first tag sends the first message and/or duration in which the first tag sends the first message. The second tag device is a tag device other than the first tag device in tag devices around the reader/writer and may have the access requirement.

Specifically, if the first tag device detects that an idle slot exists in the reader/writer, and the first tag device may send the first message in the idle slot, the first tag device sends the fifth indication information to the surrounding tag device (the second tag device), to indicate the first tag device to send the first message in the idle slot. If the surrounding tag device also needs to access, the surrounding tag device may attempt to access after one or more slots after the idle slot. In other words, after receiving the fifth indication information, the second tag device suspends accessing the reader/writer.

In this embodiment of this application, the first tag device sends indication information to the tag device around the first tag device, to indicate the occasion on which the first tag device accesses. In this way, active reporting of the tag device is implemented, and interference or collision is reduced for another tag device.

It should be understood that, that the first tag device sends the first message to the preconfigured resource of the reader/writer and that the first tag device sends the fifth indication information to the another tag device may be performed in a same embodiment, or may not be performed in a same embodiment, which is not limited in the embodiment of this application.

In an optional embodiment, in all the foregoing embodiments, if the first tag device does not receive the response from the reader/writer in the process of active reporting or sending and access, for example, the first tag device sends the first message, but the first device does not receive the response from the reader/writer for the message, or does not receive the first indication information, the first tag device may re-access the reader/writer, that is, send the first message or the third message to the reader/writer, the first message indicates that there is the active reporting requirement, and the third message is used to request to access the reader/writer. It may alternatively be that, after sending the third message, the first tag device sends the third message to the reader/writer again if the first tag device does not obtain a response message, that is, an ACK message, of the reader/writer. The third message may be the same as the first message or the second message, that is, the messages may carry same information, for example, carry a same cause value or a same detection sequence, or may carry different messages. This is not limited in this embodiment of this application.

In addition, when the first tag device does not receive the response message of the reader/writer, the first tag device may perform re-access based on a periodicity, where the periodicity may be default or preconfigured; or access in a slotted ALOHA manner. Specifically, the first tag device generates a random number. For example, the manner based on the Q value is still used. The first tag device generates a random number k, where 0 < k < 2^{Q} - 1, an information indication used to decrease a counter is received, the counter starts to perform k = k - 1, and the first tag device initiates access when the counter decreases to 0. The Q value may be default, or may be used last time or obtained from the reader/writer last time. This is not limited in this embodiment of this application.

After receiving the response message for the access, the first tag device may perform the process of the embodiment. For details, refer to the process after the first tag device sends the first message or the third message.

It should be noted that the examples in FIG. 2, FIG. 3, and FIG. 4 are used to help a person skilled in the art better understand this embodiment of this application. It is clearly that a person skilled in the art can make various equivalent modifications or changes based on the examples given in FIG. 2, FIG. 3, and FIG. 4.

The foregoing describes in detail the tag access method in this application, and the following describes communication apparatuses in this application.

FIG. 5 is a schematic block diagram of a communication apparatus 500 according to this application. As shown in FIG. 5, the communication apparatus 500 includes a processing unit 510, a sending unit 520, and a receiving unit 530.

In a possible design, the apparatus 500 may correspond to the reader/writer in the method embodiment.

It should be understood that the reader/writer in this application, that is, a handheld or fixed device that reads (and sometimes may write) tag information, may alternatively be understood as a device that communicates with a tag device, and may be in a form of a terminal, a base station, or a device having a read/write function. A specific name and a specific form of the reader/writer are not limited.

Specifically, the apparatus 500 may correspond to the reader/writer in FIG. 2, FIG. 3, and FIG. 4 according to embodiments of this application, and the apparatus may include units configured to perform the method 200 in FIG. 2, the method 300 in FIG. 3, or the method 400 in FIG. 4. In addition, the units in the apparatus 500 and the foregoing other operations and/or functions are separately intended to implement the method 200 in FIG. 2, the method 300 in FIG. 3, or the method 400 in FIG. 4.

The processing unit 510 is configured to determine first indication information, where the first indication information indicates at least one second device to access a first device when access needs to be performed; and the sending unit 520 is configured to send the first indication information.

Optionally, in an embodiment, the receiving unit 530 is further configured to receive a first message from a third device in at least one tag device, where the first message indicates that the third device requests to access; and the processing unit 510 determines the first indication information based on the first message.

Optionally, in an embodiment, the first message includes a cause why the third device needs to perform access and/or a detection sequence of the third device.

Optionally, in an embodiment, the receiving unit 530 may specifically receive the first message on a preconfigured resource.

Optionally, in an embodiment, the receiving unit 530 is further configured to receive a second message from the third device, where the second message indicates a cause why the third device needs to perform access.

Optionally, in an embodiment, the sending unit 520 is further configured to send second indication information, where the second indication information is used to request the third device to report a cause why access needs to be performed.

Optionally, in an embodiment, the sending unit 520 is further configured to send third indication information, where the third indication information indicates an occasion on which the third device reports a cause why access needs to be performed.

Optionally, in an embodiment, the sending unit 520 is further configured to send fourth indication information, where the fourth indication information indicates the at least one second device that needs to perform access to re-access the first device after the access fails.

Optionally, in an embodiment, the cause why access needs to be performed includes at least one of alarming, exception reporting, sensor data reporting, and information updating.

Optionally, the sending unit 520 and the receiving unit 530 may alternatively be integrated into a transceiver unit, which has both a receiving function and a sending function. This is not limited herein.

In an implementation, the sending unit 520 may be a transmitter, and the receiving unit 5300 may be a receiver. Alternatively, the receiver and the transmitter may be integrated into a transceiver. The processing unit 510 may be a processing apparatus.

In another implementation, the communication apparatus 500 may be a chip or an integrated circuit installed in the first device. In this implementation, the sending unit 520 and the receiving unit 530 may be communication interfaces or interface circuits. For example, the sending unit 520 is an output interface or an output circuit, the receiving unit 530 is an input interface or an input circuit, and the processing unit 510 may be a processing apparatus.

A function of the processing apparatus may be implemented by hardware, or may be implemented by hardware executing corresponding software. For example, the processing apparatus may include a memory and a processor. The memory is configured to store a computer program, and the processor reads and executes the computer program stored in the memory, so that the communication apparatus 500 performs operations and/or processing performed by the reader/writer in the method embodiments. Optionally, the processing apparatus may include only the processor, and the memory configured to store the computer program is located outside the processing apparatus. The processor is connected to the memory through a circuit/wire, to read and execute the computer program stored in the memory. For another example, the processing apparatus may be a chip or an integrated circuit.

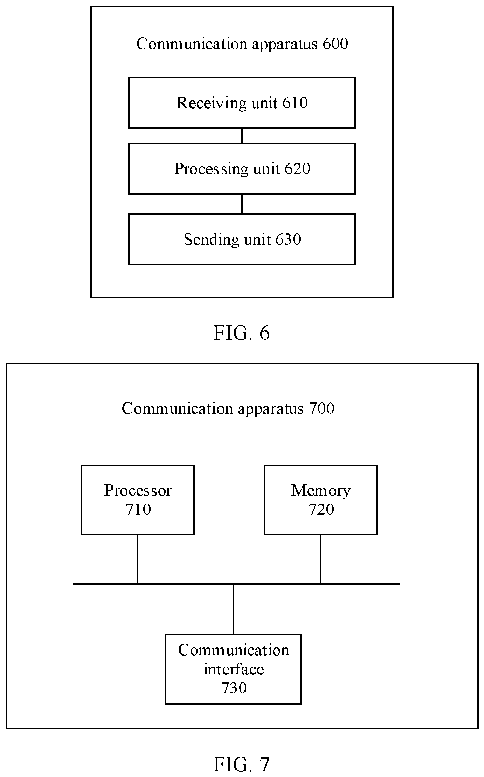

FIG. 6 is a schematic block diagram of a communication apparatus 600 according to this application. As shown in FIG. 6, the communication apparatus 600 includes a receiving unit 610, a processing unit 620, and a sending unit 630.

In a possible design, the apparatus 600 may correspond to the third device in the method embodiment.

It should be understood that the third device in this application may also be understood as a device communicating with a read/write device, and may be in a form of a terminal. A specific name and a specific form of the third device are not limited.

Specifically, the apparatus 600 may correspond to the third device in FIG. 2, FIG. 3, and FIG. 4 according to embodiments of this application, and the apparatus may include units configured to perform the method 200 in FIG. 2, the method 300 in FIG. 3, or the method 400 in FIG. 4. In addition, the units in the apparatus 600 and the foregoing other operations and/or functions are separately intended to implement the method 200 in FIG. 2, the method 300 in FIG. 3, or the method 400 in FIG. 4.

The receiving unit 610 is configured to receive first indication information from a first device, where the first indication information indicates at least one second device to access the first device when access needs to be performed, and the third device is a device in the at least one second device; and the processing unit 620 is configured to determine that access needs to be performed, where the third device accesses the first device.

Optionally, in an embodiment, the sending unit 630 is further configured to send a first message to the first device, where the first message indicates that the third device needs to perform access, and the first indication information is determined based on the first message.

Optionally, in an embodiment, the first message includes a cause why the third device needs to perform access and/or a detection sequence of the third device.

Optionally, in an embodiment, the sending unit 630 is specifically configured to send the first message to a preconfigured resource of the first device.

Optionally, in an embodiment, the sending unit 630 is further configured to send a second message to the first device, where the second message indicates the cause why the third device needs to perform access.

Optionally, in an embodiment, the receiving unit 610 is further configured to receive second indication information from the first device, where the second indication information is used to request the third device to report the cause why access needs to be performed.

Optionally, in an embodiment, the receiving unit 610 is further configured to receive third indication information from the first device, where the third indication information indicates an occasion on which the third device reports the cause why access needs to be performed.

Optionally, in an embodiment, the receiving unit 610 is further configured to receive fourth indication information from the first device, where the fourth indication information indicates the at least one second device that needs to perform access to re-access the first device after the access fails.

Optionally, in an embodiment, the sending unit 630 is further configured to send fifth indication information to a fourth device, where the fifth indication information indicates an occasion on which the third device sends the first message, and the fourth device is a device other than the third device in the at least one second device.

Optionally, in an embodiment, when the third device does not receive a response to the first message, the sending unit 630 is further configured to send the first message or a third message, where the third message is used to request to access the first device.

Optionally, in an embodiment, the cause why access needs to be performed includes at least one of alarming, exception reporting, sensor data reporting, and information updating.

Optionally, the receiving unit 610 and the sending unit 630 may alternatively be integrated into a transceiver unit, which has both a receiving function and a sending function. This is not limited herein.

**In** an implementation, the communication apparatus 600 may be the third device in the method embodiment. In the implementation, the sending unit 630 may be a transmitter, and the receiving unit 610 may be a receiver. Alternatively, the receiver and the transmitter may be integrated into a transceiver. The processing unit 620 may be a processing apparatus.

**In** another implementation, the communication apparatus 600 may be a chip or an integrated circuit installed in the third device. In this implementation, the sending unit 630 and the receiving unit 610 may be communication interfaces or interface circuits. For example, the sending unit 630 is an output interface or an output circuit, the receiving unit 620 is an input interface or an input circuit, and the processing unit 610 may be a processing apparatus.

A function of the processing apparatus may be implemented by hardware, or may be implemented by hardware executing corresponding software. For example, the processing apparatus may include a memory and a processor. The memory is configured to store a computer program, and the processor reads and executes the computer program stored in the memory, so that the communication apparatus 600 performs operations and/or processing performed by the first tag device in the method embodiments. Optionally, the processing apparatus may include only the processor, and the memory configured to store the computer program is located outside the processing apparatus. The processor is connected to the memory through a circuit/wire, to read and execute the computer program stored in the memory. For another example, the processing apparatus may be a chip or an integrated circuit.

FIG. 7 is a schematic diagram of a structure of a communication apparatus 700 according to this application. As shown in FIG. 7, the communication apparatus 700 includes one or more processors 710, one or more memories 720, and one or more communication interfaces 730. The processor 710 is configured to control the communication interface 730 to receive/send a signal, the memory 720 is configured to store a computer program, and the processor 710 is configured to: invoke the computer program from the memory 720 and run the computer program, so that a procedure and/or an operation performed by the reader/writer in the method embodiments of this application are/is performed.

For example, the processor 710 may have a function of the processing unit 510 shown in FIG. 5, and the communication interface 730 may have a function of the sending unit 520 and/or the receiving unit 530 shown in FIG. 5. Specifically, the processor 710 may be configured to perform processing or an operation performed inside the reader/writer in the method embodiments of this application, and the communication interface 730 is configured to perform sending and/or receiving actions performed by the reader/writer in the method embodiments of this application.

In an implementation, the communication apparatus 700 may be the first device in the method embodiment. In this implementation, the communication interface 730 may be a transceiver. The transceiver may include a receiver and a transmitter.

In another implementation, the communication apparatus 700 may be a chip installed in the first device. In this implementation, the communication interface 730 may be an interface circuit or an input/output interface.

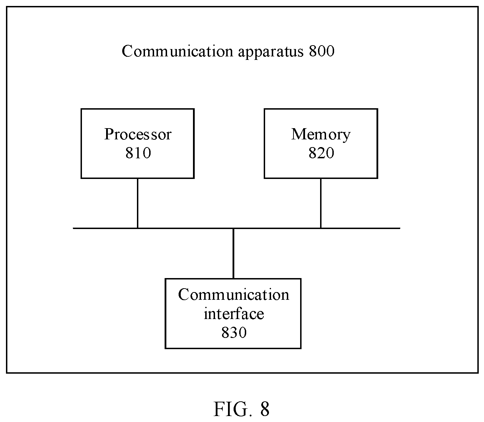

FIG. 8 is a schematic diagram of a structure of a communication apparatus 800 according to this application. As shown in FIG. 8, the communication apparatus 800 includes one or more processors 810, one or more memories 820, and one or more communication interfaces 830. The processor 810 is configured to control the communication interface 830 to receive/send a signal, the memory 820 is configured to store a computer program, and the processor 810 is configured to: invoke the computer program from the memory 820 and run the computer program, so that a procedure and/or an operation performed by the first tag device in the method embodiments of this application are/is performed.

For example, the processor 810 may have a function of the processing unit 620 shown in FIG. 6, and the communication interface 830 may have functions of the sending unit 630 and the receiving unit 610 shown in FIG. 6. Specifically, the processor 810 may be configured to perform processing or an operation performed inside the first tag device in the method embodiments of this application, and the communication interface 730 is configured to perform sending and/or receiving actions performed by the first tag device in the method embodiments of this application. Details are not described again.

In an implementation, the communication apparatus 800 may be the third device in the method embodiment. In this implementation, the communication interface 830 may be a transceiver. The transceiver may include a receiver and a transmitter.

In another implementation, the communication apparatus 800 may be a chip installed in the third device. In this implementation, the communication interface 830 may be an interface circuit or an input/output interface.

Optionally, the processor and the memory in the foregoing apparatus embodiments may be physically independent units. Alternatively, the memory may be integrated with the processor. This is not limited in this specification.

In addition, this application further provides a computer-readable storage medium. The computer-readable storage medium stores computer instructions. When the computer instructions are run on a computer, an operation and/or a procedure performed by the reader/writer in method embodiments of this application are/is performed.

This application further provides a computer-readable storage medium. The computer-readable storage medium stores computer instructions. When the computer instructions are run on a computer, an operation and/or a procedure performed by the first tag device in method embodiments of this application are/is performed.

This application further provides a computer program product. The computer program product includes computer program code or instructions. When the computer program code or the instructions is/are run on a computer, an operation and/or a procedure performed by the reader/writer in method embodiments of this application are/is performed.

This application further provides a computer program product. The computer program product includes computer program code or instructions. When the computer program code or the instructions is/are run on a computer, an operation and/or a procedure performed by the first tag device in method embodiments of this application are/is performed.

In addition, this application further provides a chip. The chip includes a processor. A memory configured to store a computer program is disposed independent of the chip. The processor is configured to execute the computer program stored in the memory, to perform an operation and/or processing performed by the reader/writer in any method embodiment.

Further, the chip may include a communication interface. The communication interface may be an input/output interface, an interface circuit, or the like. Further, the chip may include the memory.

This application further provides a chip. The chip includes a processor. A memory configured to store a computer program is disposed independent of the chip. The processor is configured to execute the computer program stored in the memory, to perform an operation and/or processing performed by the first tag device in any method embodiment.

Further, the chip may include a communication interface. The communication interface may be an input/output interface, an interface circuit, or the like. Further, the chip may include the memory.

In addition, this application further provides a communication system, including the reader/writer and the first tag device in embodiments of this application.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist independently physically, or two or more units may be integrated into one unit.
When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

## Claims

1. A communication method, comprising:
determining (210), by a first device (110), first indication information, wherein the first indication information indicates at least one second device (120) to send, when the at least one second device has a reporting requirement, a report message to the first device, the first device is a reader/writer, and the at least one second device is at least one tag device;
sending (220, 320, 420), by the first device (110), the first indication information, wherein the first indication information is carried in a select command or in a query command; and
receiving (230, 330, 430), by the first device (110), the report message from a third device (120) of the at least one second device when the third device has the reporting requirement;
wherein before the determining (210), by a first device (110), first indication information, the method further comprises:
receiving (310, 410), by the first device (110), a first message from the third device (120), wherein the first message indicates that the third device requests to send the report message; and
the determining (210), by a first device (110), first indication information comprises: determining, by the first device, the first indication information based on the first message;
wherein the first message comprises a detection sequence of the third device (120), the detection sequence is identifier information of the third device, and the first indication information comprises the detection sequence.

2. The method according to claim 1, wherein the first device (110) receives the first message on a preconfigured resource.

3. The method according to claim 1 or 2, wherein the method further comprises:
sending (260, 360, 450), by the first device (110), second indication information, wherein the second indication information indicates the at least one second device (120) that has the reporting requirement to re-send the report message to the first device after the sending of the report message fails.

4. The method according to any one of claims 1 to 3, wherein the first message comprises a cause value why the third device (120) has the reporting requirement, and the cause why the third device has the reporting requirement comprises at least one of alarming, exception reporting, sensor data reporting, and information updating.

5. A communication method, comprising:
receiving (220, 320, 420), by a third device (120), first indication information from a first device (110), wherein the first indication information indicates at least one second device (120) to send, when the at least one second device has a reporting requirement, a report message to the first device (110), the first device is a reader/writer, the at least one second device is at least one tag device, the first indication information is carried in a select command or in a query command, and the third device is a device of the at least one second device; and
sending (230, 330, 430), by the third device (120), the report message to the first device (110) when the third device has the reporting requirement;
wherein before the receiving (220, 320, 420), by a third device (120), first indication information from a first device (110), the method further comprises:
sending (310, 410), by the third device (120), a first message to the first device (110), wherein the first message indicates that the third device has the reporting requirement,
wherein the first indication information is determined based on the first message, and the first message comprises a detection sequence of the third device (120), the detection sequence is identifier information of the third device, and the first indication information includes the detection sequence.

6. The method according to claim 5, wherein the third device (120) sends (310, 410) the first message to a preconfigured resource of the first device (110).

7. The method according to claim 5 or 6, wherein the method further comprises:
sending, by the third device (120), third indication information to a fourth device, wherein the third indication information indicates an occasion on which the third device sends the first message, and the fourth device is a device other than the third device in the at least one second device (120).

8. The method according to any one of claims 5 to 7, wherein the method further comprises:
receiving (260, 360, 450), by the third device (120), second indication information from the first device (110), wherein the second indication information indicates the at least one second device (120) that has the reporting requirement to re-send the report message after the sending of the report message fails.

9. The method according to any one of claims 5 to 8, wherein the method further comprises:
when the third device (120) does not receive a response to the first message, sending, by the third device, the first message or a third message, wherein the third message is used to request to send the report message to the first device (110).

10. A communication apparatus (700), wherein the communication apparatus is the first device (110) of claim 1 or a chip for the first device of claim 1, the communication apparatus comprises at least one processor (710), the at least one processor is coupled to at least one memory (720), and the at least one processor is configured to execute a computer program or instructions stored in the at least one memory to cause the first device to perform the method according to claim 1.

11. A communication apparatus (800), wherein the communication apparatus is the third device (120) of claim 5 or a chip for the third device of claim 5, the communication apparatus comprises at least one processor (810), the at least one processor is coupled to at least one memory (820), and the at least one processor is configured to execute a computer program or instructions stored in the at least one memory to cause the third device to perform the method according to claim 5.

12. A communication system, comprising the communication apparatus according to claim 10 and the communication apparatus according to claim 11, wherein the communication apparatus according to claim 10 is the first device (110) of claim 1, and the communication apparatus according to claim 11 is the third device (120) of claim 5.

13. A computer program product, wherein the computer program product comprises computer program code, and when the computer program code is run by the communication apparatus of claim 10, the method according to claim 1 is performed.

14. A computer program product, wherein the computer program product comprises computer program code, and when the computer program code is run by the communication apparatus of claim 11, the method according to claim 5 is performed.

## Patentansprüche

1. Kommunikationsverfahren, umfassend:
Ermitteln (210), durch eine erste Vorrichtung (110), von ersten Anzeigeinformationen, wobei die ersten Anzeigeinformationen mindestens eine zweite Vorrichtung (120) anzeigen, um, wenn die mindestens eine zweite Vorrichtung eine Berichtspflicht besitzt, eine Berichtsnachricht an die erste Vorrichtung zu senden, wobei die erste Vorrichtung ein Lese-/Schreibgerät ist und die mindestens eine zweite Vorrichtung mindestens eine Tag-Vorrichtung ist;
Senden (220, 320, 420), durch die erste Vorrichtung (110), der ersten Anzeigeinformationen, wobei die ersten Anzeigeinformationen in einem Auswahlbefehl oder in einem Abfragebefehl transportiert werden; und
Empfangen (230, 330, 430), in der ersten Vorrichtung (110), der Berichtsnachricht von einer dritten Vorrichtung (120) der mindestens einen zweiten Vorrichtung, wenn die dritte Vorrichtung die Berichtspflicht besitzt;
wobei das Verfahren vor dem Ermitteln (210), durch eine erste Vorrichtung (110), von ersten Indikationsinformationen ferner umfasst:
Empfangen (310, 410), in der ersten Vorrichtung (110), einer ersten Nachricht von der dritten Vorrichtung (120), wobei die erste Nachricht anzeigt, dass die dritte Vorrichtung ein Senden der Berichtsnachricht anfordert; und
wobei das Ermitteln (210), durch eine erste Vorrichtung (110), von ersten Anzeigeinformationen umfasst: Ermitteln, durch die erste Vorrichtung, der ersten Anzeigeinformationen basierend auf der ersten Nachricht;
wobei die erste Nachricht eine Erkennungssequenz der dritten Vorrichtung (120) umfasst, wobei die Erkennungssequenz eine Kennungsinformation der dritten Vorrichtung ist und die ersten Anzeigeinformationen die Erkennungssequenz umfassen.

2. Verfahren nach Anspruch 1, wobei die erste Vorrichtung (110) die erste Nachricht auf einer vorkonfigurierten Ressource empfängt.

3. Verfahren nach Anspruch 1 oder 2, wobei das Verfahren ferner umfasst:
Senden (260, 360, 450), durch die erste Vorrichtung (110), von zweiten Anzeigeinformationen, wobei die zweiten Anzeigeinformationen die mindestens eine zweite Vorrichtung (120) anzeigen, welche die Berichtspflicht zum erneuten Senden der Berichtsnachricht an die erste Vorrichtung besitzt, nachdem das Senden der Berichtsnachricht fehlgeschlagen ist.

4. Verfahren nach einem der Ansprüche 1 bis 3, wobei die erste Nachricht einen Ursachenwert umfasst, warum die dritte Vorrichtung (120) die Berichtspflicht besitzt, und wobei die Ursache, warum die dritte Vorrichtung die Berichtspflicht besitzt, mindestens eines von einem Alarmieren, einer Ausnahmeberichterstattung, einer Sensordatenberichterstattung und einer Informationsaktualisierung umfasst.

5. Kommunikationsverfahren, umfassend:
Empfangen (220, 320, 420), in einer dritten Vorrichtung (120), von ersten Anzeigeinformationen von einer ersten Vorrichtung (110), wobei die ersten Anzeigeinformationen mindestens eine zweite Vorrichtung (120) anzeigen, um, wenn die mindestens eine zweite Vorrichtung eine Berichtspflicht besitzt, eine Berichtsnachricht an die erste Vorrichtung (110) zu senden, die erste Vorrichtung ein Lese-/Schreibgerät ist, die mindestens eine zweite Vorrichtung mindestens eine Tag-Vorrichtung ist, die ersten Anzeigeinformationen in einem Auswahlbefehl oder in einem Abfragebefehl transportiert werden und die dritte Vorrichtung eine Vorrichtung der mindestens einen zweiten Vorrichtung ist; und
Senden (230, 330, 430), durch die dritte Vorrichtung (120), der Berichtsnachricht an die erste Vorrichtung (110), wenn die dritte Vorrichtung die Berichtspflicht besitzt;
wobei das Verfahren vor dem Empfangen (220, 320, 420), in einer dritten Vorrichtung (120), von ersten Anzeigeinformationen von einer ersten Vorrichtung (110) ferner umfasst:
Senden (310, 410), durch die dritte Vorrichtung (120), einer ersten Nachricht an die erste Vorrichtung (110), wobei die erste Nachricht anzeigt, dass die dritte Vorrichtung die Berichtspflicht besitzt,
wobei die ersten Anzeigeinformationen basierend auf der ersten Nachricht ermittelt werden und die erste Nachricht eine Erkennungssequenz der dritten Vorrichtung (120) umfasst, die Erkennungssequenz eine Kennungsinformation der dritten Vorrichtung ist und die ersten Anzeigeinformationen die Erkennungssequenz beinhalten.

6. Verfahren nach Anspruch 5, wobei die dritte Vorrichtung (120) die erste Nachricht an eine vorkonfigurierte Ressource der ersten Vorrichtung (110) sendet (310, 410).

7. Verfahren nach Anspruch 5 oder 6, wobei das Verfahren ferner umfasst:
Senden, durch die dritte Vorrichtung (120), von dritten Anzeigeinformationen an eine vierte Vorrichtung, wobei die dritten Anzeigeinformationen eine Gelegenheit anzeigen, bei der die dritte Vorrichtung die erste Nachricht sendet und die vierte Vorrichtung eine andere Vorrichtung als die dritte Vorrichtung in der mindestens einen zweiten Vorrichtung (120) ist.

8. Verfahren nach einem der Ansprüche 5 bis 7, wobei das Verfahren ferner umfasst:
Empfangen (260, 360, 450), in der dritten Vorrichtung (120), von zweiten Anzeigeinformationen von der ersten Vorrichtung (110), wobei die zweiten Anzeigeinformationen die mindestens eine zweite Vorrichtung (120) anzeigen, welche die Berichtspflicht zum erneuten Senden der Berichtsnachricht besitzt, nachdem das Senden der Berichtsnachricht fehlgeschlagen ist.

9. Verfahren nach einem der Ansprüche 5 bis 8, wobei das Verfahren ferner umfasst:
wenn die dritte Vorrichtung (120) keine Antwort auf die erste Nachricht empfängt, Senden, durch die dritte Vorrichtung, der ersten Nachricht oder einer dritten Nachricht, wobei die dritte Nachricht verwendet wird, um ein Senden der Berichtsnachricht an die erste Vorrichtung (110) anzufordern.

10. Kommunikationseinrichtung (700), wobei die Kommunikationseinrichtung die erste Vorrichtung (110) nach Anspruch 1 oder ein Chip für die erste Vorrichtung nach Anspruch 1 ist, die Kommunikationseinrichtung mindestens einen Prozessor (710) umfasst, der mindestens eine Prozessor mit mindestens einem Speicher (720) gekoppelt ist, und der mindestens eine Prozessor konfiguriert ist, um ein Computerprogramm oder Anweisungen auszuführen, die in dem mindestens einen Speicher gespeichert sind, um zu veranlassen, dass die erste Vorrichtung das Verfahren nach Anspruch 1 durchführt.

11. Kommunikationseinrichtung (800), wobei die Kommunikationseinrichtung die dritte Vorrichtung (120) nach Anspruch 5 oder ein Chip für die dritte Vorrichtung nach Anspruch 5 ist, die Kommunikationseinrichtung mindestens einen Prozessor (810) umfasst, der mindestens eine Prozessor mit mindestens einem Speicher (820) gekoppelt ist, und der mindestens eine Prozessor konfiguriert ist, um ein Computerprogramm oder Anweisungen auszuführen, die in dem mindestens einen Speicher gespeichert sind, um zu veranlassen, dass die dritte Vorrichtung das Verfahren nach Anspruch 5 durchführt.

12. Kommunikationssystem, das die Kommunikationseinrichtung nach Anspruch 10 und die Kommunikationseinrichtung nach Anspruch 11 umfasst, wobei die Kommunikationseinrichtung nach Anspruch 10 die erste Vorrichtung (110) nach Anspruch 1 ist und die Kommunikationseinrichtung nach Anspruch 11 die dritte Vorrichtung (120) nach Anspruch 5 ist.

13. Computerprogrammprodukt, wobei das Computerprogrammprodukt einen Computerprogrammcode umfasst und, wenn der Computerprogrammcode durch die Kommunikationseinrichtung nach Anspruch 10 ausgeführt wird, das Verfahren nach Anspruch 1 durchgeführt wird.

14. Computerprogrammprodukt, wobei das Computerprogrammprodukt einen Computerprogrammcode umfasst und, wenn der Computerprogrammcode durch die Kommunikationseinrichtung nach Anspruch 11 ausgeführt wird, das Verfahren nach Anspruch 5 durchgeführt wird.

## Revendications

1. Procédé de communication, comprenant :
la détermination (210), par un premier dispositif (110), de premières informations d'indication, les premières informations d'indication indiquant à au moins un deuxième dispositif (120) d'envoyer, lorsque l'au moins un deuxième dispositif a une exigence de rapport, un message de rapport au premier dispositif, le premier dispositif étant un dispositif de lecture/écriture, et l'au moins un deuxième dispositif étant au moins un dispositif d'étiquetage ;
l'envoi (220, 320, 420), par le premier dispositif (110), des premières informations d'indication, les premières informations d'indication étant portées dans une commande de sélection ou dans une commande de requête ; et
la réception (230, 330, 430), par le premier dispositif (110), du message de rapport en provenance d'un troisième dispositif (120) de l'au moins un deuxième dispositif lorsque le troisième dispositif a l'exigence de rapport ;
avant la détermination (210), par un premier dispositif (110), de premières informations d'indication, le procédé comprenant en outre :
la réception (310, 410), par le premier dispositif (110), d'un premier message en provenance du troisième dispositif (120), le premier message indiquant que le troisième dispositif demande à envoyer le message de rapport ; et
la détermination (210), par un premier dispositif (110), de premières informations d'indication comprenant : la détermination, par le premier dispositif, des premières informations d'indication sur la base du premier message ;
le premier message comprenant une séquence de détection du troisième dispositif (120), la séquence de détection étant des informations d'identification du troisième dispositif, et les premières informations d'indication comprenant la séquence de détection.

2. Procédé selon la revendication 1, le premier dispositif (110) recevant le premier message sur une ressource préconfigurée.

3. Procédé selon la revendication 1 ou 2, le procédé comprenant en outre :
l'envoi (260, 360, 450), par le premier dispositif (110), de secondes informations d'indication, les secondes informations d'indication indiquant à l'au moins un deuxième dispositif (120) qui a l'exigence de rapport de renvoyer le message de rapport au premier dispositif après l'échec de l'envoi du message de rapport.

4. Procédé selon l'une quelconque des revendications 1 à 3, le premier message comprenant une valeur de cause pour laquelle le troisième dispositif (120) a l'exigence de rapport, et la cause pour laquelle le troisième dispositif a l'exigence de rapport comprenant au moins l'un parmi une alarme, un rapport d'exception, un rapport de données de capteur, et une mise à jour d'informations.

5. Procédé de communication, comprenant :
la réception (220, 320, 420), par un troisième dispositif (120), de premières informations d'indication en provenance d'un premier dispositif (110), les premières informations d'indication indiquant à au moins un deuxième dispositif (120) d'envoyer, lorsque l'au moins un deuxième dispositif a une exigence de rapport, un message de rapport au premier dispositif (110), le premier dispositif étant un dispositif de lecture/écriture, l'au moins un deuxième dispositif étant au moins un dispositif d'étiquetage, les premières informations d'indication étant portées dans une commande de sélection ou dans une commande de requête, et le troisième dispositif étant un dispositif de l'au moins un deuxième dispositif ; et
l'envoi (230, 330, 430), par le troisième dispositif (120), du message de rapport au premier dispositif (110) lorsque le troisième dispositif a l'exigence de rapport ;
avant la réception (220, 320, 420), par un troisième dispositif (120), de premières informations d'indication provenant d'un premier dispositif (110), le procédé comprenant en outre :
l'envoi (310, 410), par le troisième dispositif (120), d'un premier message au premier dispositif (110), le premier message indiquant que le troisième dispositif a l'exigence de rapport,
les premières informations d'indication étant déterminées sur la base du premier message, et le premier message comprenant une séquence de détection du troisième dispositif (120), la séquence de détection étant des informations d'identification du troisième dispositif, et les premières informations d'indication comprenant la séquence de détection.

6. Procédé selon la revendication 5, le troisième dispositif (120) envoyant (310, 410) le premier message à une ressource préconfigurée du premier dispositif (110).

7. Procédé selon la revendication 5 ou 6, le procédé comprenant en outre :
l'envoi, par le troisième dispositif (120), de troisièmes informations d'indication à un quatrième dispositif, les troisièmes informations d'indication indiquant une occasion à laquelle le troisième dispositif envoie le premier message, et le quatrième dispositif étant un autre dispositif que le troisième dispositif dans l'au moins un deuxième dispositif (120).

8. Procédé selon l'une quelconque des revendications 5 à 7, le procédé comprenant en outre :
la réception (260, 360, 450), par le troisième dispositif (120), de secondes informations d'indication provenant du premier dispositif (110), les secondes informations d'indication indiquant à l'au moins un deuxième dispositif (120) qui a l'exigence de rapport de renvoyer le message de rapport après l'échec de l'envoi du message de rapport.

9. Procédé selon l'une quelconque des revendications 5 à 8, le procédé comprenant en outre :
lorsque le troisième dispositif (120) ne reçoit pas de réponse au premier message, l'envoi, par le troisième dispositif, du premier message ou d'un troisième message, le troisième message étant utilisé pour demander l'envoi du message de rapport au premier dispositif (110).

10. Appareil de communication (700), l'appareil de communication étant le premier dispositif (110) selon la revendication 1 ou une puce pour le premier dispositif selon la revendication 1, l'appareil de communication comprenant au moins un processeur (710), l'au moins un processeur étant couplé à au moins une mémoire (720), et l'au moins un processeur étant configuré pour exécuter un programme informatique ou des instructions informatiques stockés dans l'au moins une mémoire pour amener le premier dispositif à réaliser le procédé selon la revendication 1.

11. Appareil de communication (800), l'appareil de communication étant le troisième dispositif (120) selon la revendication 5 ou une puce pour le troisième dispositif selon la revendication 5, l'appareil de communication comprenant au moins un processeur (810), l'au moins un processeur étant couplé à au moins une mémoire (820), et l'au moins un processeur étant configuré pour exécuter un programme informatique ou des instructions informatiques stocké(es) dans l'au moins une mémoire pour amener le troisième dispositif à réaliser le procédé selon la revendication 5.

12. Système de communication, comprenant l'appareil de communication selon la revendication 10 et l'appareil de communication selon la revendication 11, l'appareil de communication selon la revendication 10 étant le premier dispositif (110) selon la revendication 1, et l'appareil de communication selon la revendication 11 étant le troisième dispositif (120) selon la revendication 5.

13. Produit de programme informatique, le produit de programme informatique comprenant un code de programme informatique, et lorsque le code de programme informatique est exécuté par l'appareil de communication selon la revendication 10, le procédé selon la revendication 1 étant réalisé.

14. Produit de programme informatique, le produit de programme informatique comprenant un code de programme informatique, et lorsque le code de programme informatique est exécuté par l'appareil de communication selon la revendication 11, le procédé selon la revendication 5 étant réalisé.
